**Europäisches Patentamt**

**European Patent Office**

**Office européen des brevets**

(19)

(11) Publication number : **0 507 638 A2**

(12) # EUROPEAN PATENT APPLICATION

(21) Application number : **92303029.0**

(22) Date of filing : **06.04.92**

(51) Int. Cl.$^5$ : **G01B 11/26,** G01B 11/14

(30) Priority : **05.04.91 JP 99852/91**

(43) Date of publication of application :
**07.10.92 Bulletin 92/41**

(84) Designated Contracting States :
**DE ES FR GB IT**

(71) Applicant : **Bridgestone Corporation**
**1-1, Kyobashi 1-Chome Chuo-Ku**
**Tokyo 104 (JP)**

(72) Inventor : **Anno, Tsuyoshi**
**1-1, Ogawahigashi-Cho 3-chome**
**Kodaira City, Tokyo (JP)**

(74) Representative : **Whalley, Kevin et al**
**MARKS & CLERK 57/60 Lincoln's Inn Fields**
**London WC2A 3LS (GB)**

(54) **Method and apparatus for detecting angle and pitch of cord in belt-shaped members.**

(57)    The angle and the pitch of a plurality of cords embedded in a belt-shaped member (10) having wave-shaped surface unevennesses, extending in a direction substantially perpendicular to the extending direction of the embedded cords, are detected by a method which comprises illuminating the wave-shaped surface unevennesses on a surface of an intermediate portion in the width direction of the belt-shaped member (10) with light irradiating from an obliquely upper position, picking up a brightness image of the surface unevennesses of the intermediate portion, detecting the brightness of each of a plurality of micropixels in an image field, deriving a brightness distribution in the width direction or longitudinal direction of the belt-shaped member, statistically analyzing the brightness distribution from the detected brightness, calculating relative distances between the embedded cords in the width and longitudinal directions, and determining the cord extending angle with respect to the longitudinal direction and the pitch of the embedded cords from calculated results.

FIG. 2

EP 0 507 638 A2

This invention relates to a method and an apparatus for detecting an angle and pitch of a cord in a belt-shaped member including a plurality of cords embedded therein in substantially uniform arrangement and orientation, in particular for determining either an extending direction of a cord or a cord pitch i.e. a distance between adjacent cords in a predetermined direction in a belt-shaped member.

Such a detecting method and an apparatus are disclosed in Japanese Patent Application No. 56-188938 wherein an angle of an inclined edge in the width direction of a belt-shaped member to a transferring direction is determined from a transferring speed and a distance in the width direction of the belt-shaped member and further disclosed in Japanese Patent Application No. 60-145696 wherein a plurality of feelers which are enable to contact with individual steel cords exposed on the cut edge surface of the belt-shaped member and a plurality of feelers which are enable to simultaneously contact with a plurality of wires including the steel cords contacted with the first group of feelers and the feelers continuously measure a variation in an electric amount and also measure positions of the ends of wires contacting with the feelers in the width direction of the belt-shaped member, thereby determining an extending angle of the cord from those measured values and the constant value of the width of belt-shaped member.

Further, Japanese Patent Application No. 1-148379 discloses that a photograph of both cut edges in the width direction of a belt-shaped member being transferred is taken by means of a pair of two-dimensional TV-cameras and then the both end positions of the cut edge portion of the belt-shaped member and further the extending angle of the cut edge portion are determined from image signals which were binary coded processed, respectively.

However, these known apparatuses are arranged such that the both cut edges of the belt-shaped member or the both end positions of embedded cords are measured and then the extending angle of the cord is determined from the measured positions and an actually measured width of the belt-shaped member or a width of the belt-shaped member assumed as a constant width. Therefore, there is a problem in either case that an actual angle of the embedded cord to the width direction of the belt-shaped member, particularly an angle of the cord in the intermediate portion of the belt-shaped member is not accurately determined. Furthermore, in a method of determining a variation of an electric amount by means of a feeler, an object to be determined is limited to a belt-shaped member having an electric conductivity, for example, a belt-shaped member including steel cords.

While, in tires preferably using such a belt-shaped member, it has been known that in order to correspond to improvement of performances of vehicles, use is advantageously made of a belt-shaped member including embedded cords which are uniformly arranged at an angle to the longitudinal direction and spaced with a predetermined pitch to each other so as to improve performances of tires.

An object of the present invention is to provide a method and an apparatus for determining at least one of an extending direction of cords arranged in at least an intermediate portion in the width direction of a belt-shaped member and an actual distance between adjacent cords or a distance between adjacent cords in a predetermined direction i.e. a cord pitch.

In order to accomplish the aforementioned object, according to a first aspect of the invention, a method of detecting a cord angle to a predetermined direction and a cord pitch of a plurality of cords embedded in a belt-shaped member having wave-shaped surface unevennesses extending in a direction substantially perpendicular to an extending direction of the embedded cords, comprising steps of illuminating the wave-shaped surface unevennesses on a surface of an intermediate portion in the width direction of the belt-shaped member with a light irradiating from an obliquely upper position, picking up a brightness image of the surface unevennesses of the intermediate portion, detecting the brightness of each of micropixels in an image field, deriving a brightness distribution in the width direction or longitudinal direction of the belt-shaped member from the detected brightnesses, statistically analyzing the brightness distribution, calculating relative distances between the embedded cords in the width and longitudinal directions, and determining a cord angle to the longitudinal direction and a pitch of the embedded cords from the calculated results.

In the first aspect of the invention, the method further comprises steps of illuminating one of cut edges of the belt-shaped member, picking up brightness image of the illuminated cut edge, detecting the brightness of each of micro-pixels in an image field, deriving a brightness distribution in the width direction or the longitudinal direction of the beltshaped member from the detected brightness, binary coding the brightness distribution, calculating an angle of the edge of the belt-shaped member to a predetermined direction, and summing the calculated results and the cord angle to the longitudinal direction of the belt-shaped member.

According to a second aspect of the invention, an apparatus for detecting an angle to a predetermined direction of cords in a belt-shaped member including a plurality of cords embedded therein and having wave-shaped surface unevenness extending in a direction substantially perpendicular to the extending direction of the embedded cords, comprises means for illuminating the wave-shaped surface unevennesses on a surface of an intermediate portion in the width direction of the belt-shaped member with an irradiating light, means for picking-up a brightness image of the illuminated surface unevennesses, and means for operating an image signal output from the picking-up means to determine at least one of an angle of the embedded cords to a predetermined direction and cord pitches in directions parallel and perpendicular to the predetermined direction, respectively.

In the second aspect of the invention, the apparatus further comprises an additional means for illuminating one of cut edge portions of the belt-shaped member, an additional means for picking up the brightness image of the illuminated cut edge portion, means for binary coding the brightness image output from the additional picking-up means, means for calculating a angle of the edge of the belt-shaped member to a predetermined direction, and means for summing the calculated angle and the cord angle to the longitudinal direction of the belt-shaped member.

According to the invention, an actual cord angle to a predetermined direction and a cord pitch in the predetermined direction can be determined by operating the image signal output from means for picking up the image of the surface unevenness formed on the surface of the belt-shaped member corresponding to the extending direction of a plurality of cords embedded and orientated in the belt-shaped member.

Furthermore, an actual cord angle of cords embedded in the belt-shaped member to the longitudinal direction of the belt-shaped member can be determined by summing an angle of one of cut edges of the belt-shaped member which is determined from an image signal detected by a pick-up device arranged at a position corresponding to the cut edged and the angle of cords embedded in the intermediate portion in the width direction of the belt-shaped member.

The invention will be more fully understood by referring to the following detailed descriptions taken in connection with the accompanying drawings.

Fig. 1a is a partial plan view of a belt-shaped member embedded with a plurality of cords;

Fig. 1b is a sectional view of the belt-shaped member shown in Fig. 1a;

Fig. 2 is a diagrammatic view showing a preferred embodiment of the invention;

Fig. 3a is a diagrammatic view illustrating an image of the surface unevenness of an intermediate portion of the belt-shaped member;

Fig. 3b is a graph showing an output signal of an image shown in Fig. 3a;

Fig. 3c is a graph showing a power spectrum of the output signal shown in Fig. 3b;

Fig. 3d is a histogram showing a binary coded signal derived from the output signal shown in Fig. 3b;

Fig. 3e is a graph for determining an extending angle of cords embedded in the belt-shaped member from the output signal shown in fig. 3a; and

Fig. 4 is a diagrammatic view of another embodiment of the invention.

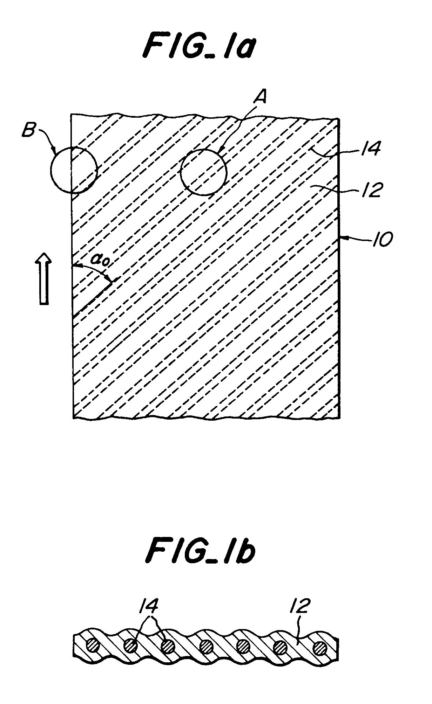

Fig. 1a shows a portion of a long belt-shaped member 10 formed by joining a plurality of cut sheets having a predetermined width and length at inclined cut edges thereof. Each of the cut sheet is usually manufactured by preparing a laminated rubber belt composed of two rubber sheets 12 and a plurality of cords 14 sandwiched between the rubber sheets and parallelly arranged to the longitudinal direction of the laminated rubber belt and cutting the laminated rubber belt at a predetermined angle ($\alpha°$) to a cord extending direction with a predetermining width. Therefore, it will be expected that the belt-shaped member 10 has a plurality of embedded cords 14 obliquely extending at an angle ($\alpha_0$) to the longitudinal direction of the belt-shaped member as shown in Fig. 1a and an uneven surface formed with a plurality of wave-shaped surface unevennesses corresponding to the embedded cords as shown in Fig. 1b. The surface unevenness are extended in a direction substantially perpendicular to the cord extending direction.

However, it is difficult to arrange a plurality of cords in surely parallel to each other in an embedding operation of cords 14 and even if the embedding operation can be effected to embed a plurality of cord in parallel to each other, the cords 14 are not always accurately cut at a predetermined angle ($\alpha_0$) to the longitudinal direction of the belt-shaped member, so that an actual angle ($\alpha$) of the cord to the cut edge of the belt-shaped member does not coincide with the predetermined angle.

Accordingly, it is important to measuring the actual angle ($\alpha$) of the embedded cord to the cut edge of the belt-shaped member. Furthermore, the extending direction or longitudinal direction of the belt-shaped member does not always coincide with the predetermined direction, i.e. a transferring direction of the belt-shaped member, therefore it is important to measure an angle of the cut edge portion to the transferring direction of the belt-shaped portion.

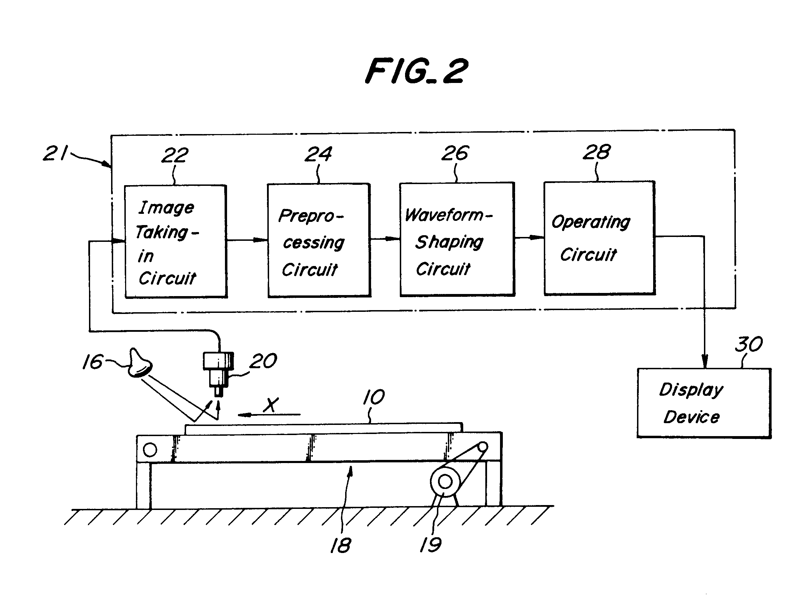

Referring to Fig. 2 showing an embodiment of the apparatus according to the present invention, a light 16 is positioned to illuminate the surface unevenness formed on the surface of in the intermediate portion in the width direction of the belt-shaped member 10 which is transferred in a direction X by means of transferring device 18 which is driven by a driving motor 19. Therefore, the brightness of the surface of the belt-shaped member illuminated by the light 16 is varied by reflection of light on the surface unevenness. The brightness and darkness on the surface of the belt-shaped member corresponds to the embedded cords.

While, an image of the surface portion A (Fig. 1) of the intermediate portion of the belt-shaped member 10 irradiated by the light 16 is picked up by means of a pick-up device 20 located at the same side as that of the light 16. The pick-up device 20 converts a visual image information to an electric signal and preferably have a function such that the brightness caused by a plurality of wave-shaped surface unevennesses formed on the surface of the belt-shaped member 10 can be picked up as an image in appropriate accuracy. In this embodiment, use is made of a two-dimensional TV-camera having a picking-up field of length ($\ell$) 50 mm in the transferring direction of the belt-shaped member and 50 mm in a direction perpendicular to the transferring direction, respectively, and the number of pixels of 500x500. When such a TV-camera is used, the cord extending angle can be determined with accuracy of $\tan^{-1}$ ($\ell$/500)=0.130 deg. This analyzing accuracy of 0.130 deg is not sufficient, but the cord angle is finally satisfactory determined by an image processing including noise removing operation. It is understood that the cord angle can be determined in higher accuracy by using a high grade TV-camera having great number of pixels for picking-up the image.

The image signals output from the TV-camera 20 is supplied to an operation part 21. This operation part 21 takes in the image signal output from the TV-camera, performs a predetermined operation for the image signal to determine a cord extending angle to the predetermined direction, i.e. the transferring direction of the belt-shaped member in this embodiment. The operation part preferably includes an image taking-in circuit such as an image buffer memory circuit including a frame memory since the image taking-in circuit can take in the necessary image signals relating to the surface unevenness without interrupting transfer of the belt-shaped member.

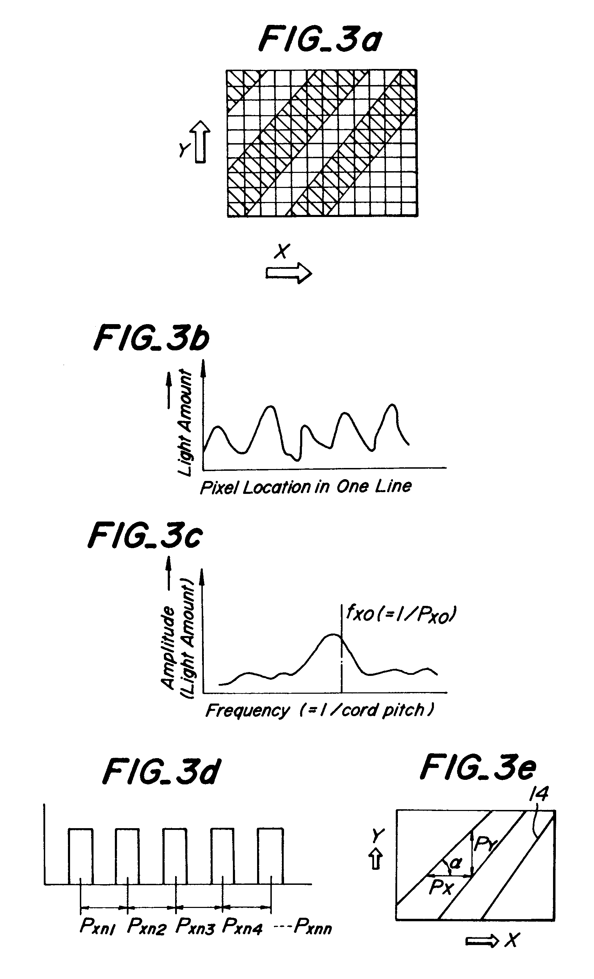

The image signal output from the two-dimensional TV-camera 20 can be obtained by scanning the surface of the belt-shaped member in the transferring direction X and a direction Y perpendicular to the transferring direction. For example, the surface of the belt-shaped member is scanned by the TV-camera in the transferring direction X for each one line as shown in Fig. 3a to detect the surface brightness of the belt-shaped member with a width of one pixel unit and, thereby a picked up image signal having a waveform as shown in Fig. 3b is output. Such an output image signal usually includes a signal corresponding to the surface unevenness of the belt-shaped member and noises caused by a surface flaw, surface roughness, glass and others on the surface of the belt-shaped member. Therefore, it is desirable to connect the image taking-in circuit 22 to a preprocessing circuit 24 to remove the noises by filtering such as a spatial filtering.

All the pixel lines are scanned by the picking up TV-camera. Then, each the picked up image signal for each pixel line is filtered in the preprocessing circuit 24 and shaped in a waveform-shaping circuit 26.

In the waveform-shaping circuit 26, all the preprocessed signals for all pixel lines are processed, that is to say, each of the filtered signals are processed respectively by Fourier analysis, to determine a power spectrum diagram as shown in Fig. 3c. A central frequency fx0 at the center of the power spectrum relating to the transferring direction (X) is determined by a position of center of area of the power spectrum and a central pitch $P_{X0}$ relating to the transferring direction is determined by a reciprocal number of the central frequency. Similarly, a central pitch $P_{Y0}$ relating to a direction (Y) perpendicular to the transferring direction can be determined. Alternately, the pitch $P_{X0}$ in the transferring direction (X) can be determined by binary-coding picked up image signals having a waveform similar to the waveform of the picked up image signal as shown in Fig. 3b to quantize the signals as indicated diagrammatically in Fig. 3d, and determining a group of cord pitches ($P_{X11}$, $P_{X12}$, ..., $P_{X1n}$) for one of all pixel lines in the transferring direction (X) and determining each group of cord pitches ($P_{X11}$, $P_{X12}$, ..., $P_{Xnn}$) for all pixel lines in the transferring direction (X), by repeating said binary-coding step to determine the position of center of area of a histogram of the group of the cord pitches as shown in Fig. 3d. Also, the pitch $P_{Y0}$ in the direction (Y) can be determined by the same method as the case of the pitch $P_{X0}$.

Thus, the cord extending angle and pitch can be determined in high accuracy by analyzing and processing in detail the picked up image signals on a level with micro-pixel unit. The cord pitches ($P_{Y0}$, $P_{Y3}$) in the transferring direction (X) and the transverse direction (Y) of the cords embedded in the belt-shaped member are determined by sequentially processing by the aforementioned steps the image signals picked up by the "TV"-camera 20. Thus determined pitches have a relationship to each other as shown in Fig. 3e. Therefore, the actual angle ($\alpha$) of the cords to the transferring direction (X) of the belt-shaped member 10 can be determined by the following operation in an operating circuit 28.

$$\alpha = \tan^{-1} (P_{Y0}/P_{X0})$$

Furthermore, a pitch between adjacent cords can easily be determined by an operation of $P_{X0} \sin \alpha$ in the operating circuit. These results of operations are indicated in a display device 30.

In the embodiment mentioned above by referring to Fig. 2, the cord extending angle of the embedded cord to the transferring direction (X) of the belt-shaped member can be determined, but a cord extending angle to a cut edge of the belt-shaped member could not be determined.

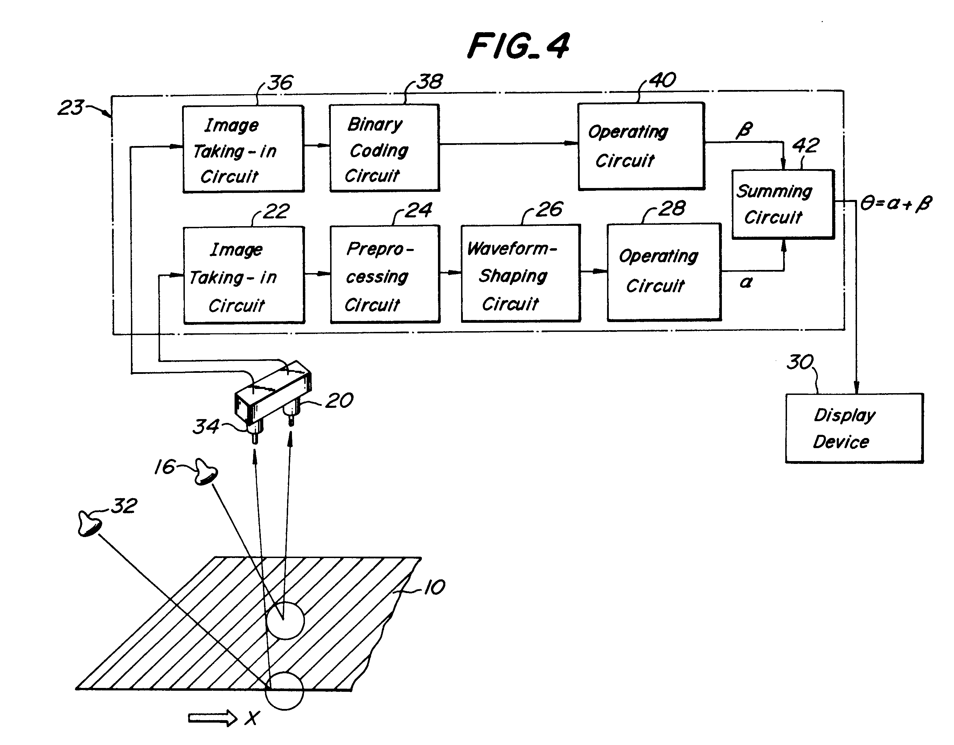

Referring to Fig. 4 showing another embodiment of the detecting apparatus according to the present invention, the detecting apparatus includes the irradiating means 16 for illuminating the surface unevenness on the surface of the intermediate portion in the width direction of the belt-shaped member 10, the two-dimensional TV-camera 20 for picking up an image of the surface unevenness, an additional irradiating means 32 for illuminating one of cut edges (B) of the belt-shaped member shown in Fig. 1a and an additional two-dimensional TV-camera 34 for picking up an image of the cut edge (B) illuminated by the additional irradiating means 32. The additional two-dimensional camera 34 is positioned on a line passing the two-dimensional TV-camera 20 and transversing the belt-shaped member in the width direction thereof so that individual pixel lines of the TV-cameras are parallel to each other in order to make it possible to determine an angle ($\beta$) of one of cut edges of the belt-shaped member 10 to the transferring direction thereof.

In this embodiment, an output image signal of the cut edge of the belt-shaped member is supplied from the additional two-dimensional TV-camera to an operation part 23 and simultaneously an output image signal of the surface unevenness on the surface of the intermediate portion in the width direction of the belt-shaped member is supplied from the two-dimensional TV-camera to the operation part 23. The operation part 23 takes in the output image signal from the TV-camera 20 and operates a predetermined process to determine the cord extending angle ($\alpha$) of each of cords embedded in the belt-shaped member to the transferring direction thereof, and also takes in the output image signal from the additional TV-camera 34 and operates a predetermined process to determine the angle ($\beta$) of the cut edge to the transferring direction.

The additional two-dimensional camera 34 scans the surface of the cut edge of the belt-shaped member 10 in the transferring direction of the belt-shaped member and a transversing direction perpendicular to the transferring direction, and outputs image signals to an image taking-in circuit 36 such as an image buffer memory circuit including frame memories. The image signals are converted to binary coded image signals representing white and black pixels in a binary coding circuit 38 and then supplied to an operating circuit 40.

The operating circuit 40 determines a straight line (L) being boundary portions which correspond to the cut edge portions of the belt-shaped member coded to white and black pixels of the TV-camera 34 by the method of least squares and further determines the angle ($\beta$) of the straight line to the transferring direction (X) of the belt-shaped member 10. The operating circuits 28 and 40 are connected to a summing circuit 42.

The summing circuit 42 effects to sum the output signals from the operating circuits 28 and 40 to determine the angle ($\theta$) of the embedded cord to the cut edge of the belt-shaped member 10 by a formula $\theta=\alpha+\beta$.

It is understood that the additional two-dimensional TV-camera 34, the image buffer memory circuit 36, and the operating circuit 40 may be omitted by commonly using the two-dimensional TV-camera, the image buffer memory circuit and the operating circuit for determining the angle ($\theta$). Furthermore, one TV-camera may be commonly used to determining the angle ($\alpha$) and angle ($\theta$), if necessary.

According to the invention, an actual cord angle to the transferring direction or the cut edge of the belt-shaped member can be automatically and accurately determined without interruption of transferring of the belt-shaped member. Furthermore, the cord angle and cord pitch can be detected even if the cord material is not electrically conductive since the detection is effected by determining the position of the wave-shaped surface unevenness formed on the surface of the belt-shaped member caused by the cords embedded therein.

## Claims

1. A method of detecting a cord angle to a predetermined direction and a cord pitch of a plurality of cords embedded in a belt-shaped member having wave-shaped surface unevennesses extending in a direction substantially perpendicular to an extending direction of the embedded cords, comprises steps of illuminating the wave-shaped surface unevennesses on a surface of an intermediate portion in the width direction of the belt-shaped member with a light irradiating from an obliquely upper position, picking up a brightness image of the surface unevennesses of the intermediate portion, detecting the brightness of each of micropixels in an image field, deriving a brightness distribution in the width direction or longitudinal direction of the belt-shaped member from the detected brightnesses, statistically analyzing the brightness distribution, calculating relative distances between the embedded cords in the width and longitudinal directions, and determining a cord angle to the longitudinal direction and a pitch of the embedded cords from the calculated results.

2. The method claimed in claim 1, further comprising steps of illuminating one of cut edges of the belt-shaped member, picking up brightness image of the illuminated cut edge, detecting the brightness of each of micro-pixels in an image field, deriving a brightness distribution in the width direction or the longitudinal direction of the belt-shaped member from the detected brightness, binary coding the brightness distribution, calculating an angle of the edge of the belt-shaped member to a predetermined direction, and summing the calculated results and the cord angle to the longitudinal direction of the belt-shaped member.

3. An apparatus for detecting a cord angle to a pre-

9      **EP 0 507 638 A2**      10

determined direction and a cord pitch of a plurality of cords embedded in a belt-shaped member having wave-shaped surface unevennesses extending in a direction substantially perpendicular to the extending direction of the embedded cords, comprising means for illuminating the wave-shaped surface unevennesses on a surface of an intermediate portion in the width direction of the belt-shaped member with an irradiating light, means for picking-up a brightness image of the illuminated surface unevennesses, and means for operating an image signal output from the picking-up means to determine at least one of an angle of the embedded cords to a predetermined direction and cord pitches in directions parallel and perpendicular to the predetermined direction, respectively.

4. The apparatus claimed in claim 3, further comprising an additional means for illuminating one of cut edge portions of the belt-shaped member, an additional means for picking up the brightness image of the illuminated cut edge portion, means for binary coding the brightness image output from the additional picking-up means, means for calculating a angle of the edge of the belt-shaped member to a predetermined direction, and means for summing the calculated angle and the cord angle to the longitudinal direction of the belt-shaped member.

6

# FIG_1a

# FIG_1b

# FIG. 2

21

| 22 | 24 | 26 | 28 |
|---|---|---|---|
| Image Taking-in Circuit | Prepro-cessing Circuit | Waveform-Shaping Circuit | Operating Circuit |

30 — Display Device

16  20  X  10  19  18

## FIG_3a

Y →

X →

## FIG_3b

Light Amount →

Pixel Location in One Line

## FIG_3c

Amplitude (Light Amount) →

$f_{xo}(=1/P_{xo})$

Frequency $(=1/cord\ pitch)$

## FIG_3d

$P_{xn1}$  $P_{xn2}$  $P_{xn3}$  $P_{xn4}$  ---$P_{xnn}$

## FIG_3e

14

Y →

$P_Y$

$a$

$P_X$

X →

FIG. 4